# FASCICULE DE BREVET EUROPEEN

(11) **EP 1 380 549 B1**
(45) Date de publication et mention de la délivrance du brevet: **23.03.2005**
(21) Numéro de dépôt: 03356106.9
(22) Date de dépôt: 08.07.2003
(51) Int. Cl.: C03B 23/03, C03B 35/16

(54) **Machine et procédé de pressage-cintrage de feuilles de verre**
Vorrichtung und Verfahren zum Pressbiegen von Glasscheiben
Apparatus and process for press bending glass sheets

(30) Priorité: 09.07.2002 FR 0208625
(43) Date de publication de la demande: 14.01.2004
(73) Titulaire: G.M.C. For Glass Industry Pour l'industrie du Verre, 69200 Venissieux (FR)
(72) Inventeur: Marmonier, Guy Marcel Gilbert Roland, 69200 Venissieux (FR)
(74) Mandataire: Schouller, Jean-Philippe

(56) Documents cités:
- EP-A- 0 364 415
- US-A- 4 723 983
- US-A- 4 976 763
- US-A- 5 022 907
- US-A- 5 743 931

## Description

L'invention a trait à une machine et à un procédé de pressage-cintrage de feuilles de verre.

Il est connu de conformer des feuilles de verre plat au moyen de machines dites « presses » dans lesquelles des organes de conformation mâles et femelles sont déplacés selon une direction essentiellement verticale et perpendiculaire à une direction de convoyage des feuilles de verre. Au terme de l'opération de cintrage, les feuilles de verre sont évacuées en direction d'une unité de trempe, alors qu'elles dont déjà conformées et encore malléables du fait de la température relativement élevée où elles se trouvent. Différents systèmes ont pu être envisagés pour déplacer les feuilles de verre cintrées de l'unité de pressage-cintrage vers une unité de trempe.

Ainsi, EP-A-0 364 415 prévoit d'incliner les rouleaux d'un convoyeur selon des directions différentes de façon à former une sorte de berceau. Un tel berceau ne peut pas précisément être adapté à la géométrie des feuilles de verre cintrées et les bords longitudinaux des feuilles de verre ne sont pas ou sont mal supportés.

US-A-5,743,931 fait état de rouleaux de convoyage installés dans l'unité de pressage-cintrage qui ont une section transversale proche de la forme définitive des feuilles de verre. Ces rouleaux doivent être adaptés à chaque géométrie des feuilles de verre à tremper, ce qui impose le changement de ces rouleaux lors des modifications de la fabrication, avec un arrêt important de la production.

C'est à ces inconvénients qu'entend plus particulièrement remédier l'invention en proposant une machine de pressage-cintrage qui évite une déformation des feuilles de verre postérieurement à l'opération de pressage-cintrage, sans avoir recours à des rouleaux de convoyage spécialement configurés pour chaque géométrie de feuille de verre.

Dans cet esprit, l'invention concerne une machine de pressage-cintrage de feuilles de verre comprenant, en série le long d'une direction de convoyage, un four de préchauffage, une unité de pressage-cintrage et une unité de trempe des feuilles de verre. Cette machine est caractérisée en ce que, au niveau de l'unité de pressage-cintrage, des supports latéraux indépendants du dispositif de convoyage sont prévus pour recevoir en appui les bords longitudinaux d'une feuille de verre, au terme d'une opération de pressage-cintrage réalisée dans l'unité de pressage-cintrage, et guider ces bords longitudinaux, lors d'un déplacement de la feuille de verre de l'unité de pressage-cintrage vers l'unité de trempe.

Grâce à l'invention, les bords longitudinaux des feuilles de verre sont supportés, au point qu'ils ne risquent pas de s'affaisser, le verre étant encore malléable lors de son transfert de l'unité de pressage-cintrage vers l'unité de trempe.

Selon des aspects avantageux mais non obligatoires de l'invention, cette machine incorpore une ou plusieurs des caractéristiques des revendications 2 à 11 :

L'invention a également trait à un procédé de pressage-cintrage d'une feuille de verre qui peut être mis en oeuvre avec la machine décrite ci-dessus et, plus spécifiquement, un procédé comprenant une première étape dans laquelle la feuille de verre est pressée par un premier organe de conformation contre un second organe de conformation dans une unité de pressage-cintrage et une deuxième étape de déplacement de cette feuille de verre par un dispositif de convoyage vers une unité de trempe. Ce procédé est caractérisé en ce qu'il comprend une étape intermédiaire entre les étapes précitées au cours de laquelle des supports latéraux indépendants du dispositif de convoyage sont amenés au voisinage ou au contact des bords longitudinaux de la feuille de verre.

Grâce à ce procédé et conformément à l'objet de l'invention, on évite un affaissement des feuilles de verre entre leur pressage-cintrage et leur trempe.

Selon des aspects avantageux mais non obligatoires de l'invention, ce procédé peut incorporer les caractéristiques de l'une ou l'autre des revendications 13 et 14.

L'invention sera mieux comprise et d'autres avantages de celle-ci apparaîtront plus clairement à la lumière de la description qui va suivre d'un mode de réalisation d'une machine conforme à son principe, donnée uniquement à titre d'exemple et faite en référence aux dessins annexés, dans lesquels :
- la figure 1 est une vue transversale par bout d'une unité de pressage-cintrage d'une machine conforme à l'invention ;
- la figure 2 est une vue de côté de l'unité de la figure 1 et des matériels disposés en amont et en aval sur une ligne de fabrication de feuilles de verre cintrées ;
- la figure 3 est une vue partielle en perspective de l'unité de pressage-cintrage représentée aux figures 1 et 2, l'un des support latéraux étant omis pour la clarté du dessin ;
- la figure 3A est une vue à plus grande échelle du détail III A à la figure 3 ;
- la figure 4 est une vue, à plus grande échelle, du détail IV à la figure 1 au terme d'une opération de pressage-cintrage et
- la figure 5 est une coupe, à plus grande échelle, de la partie centrale d'un rouleau de convoyage de l'unité des figures à 4.

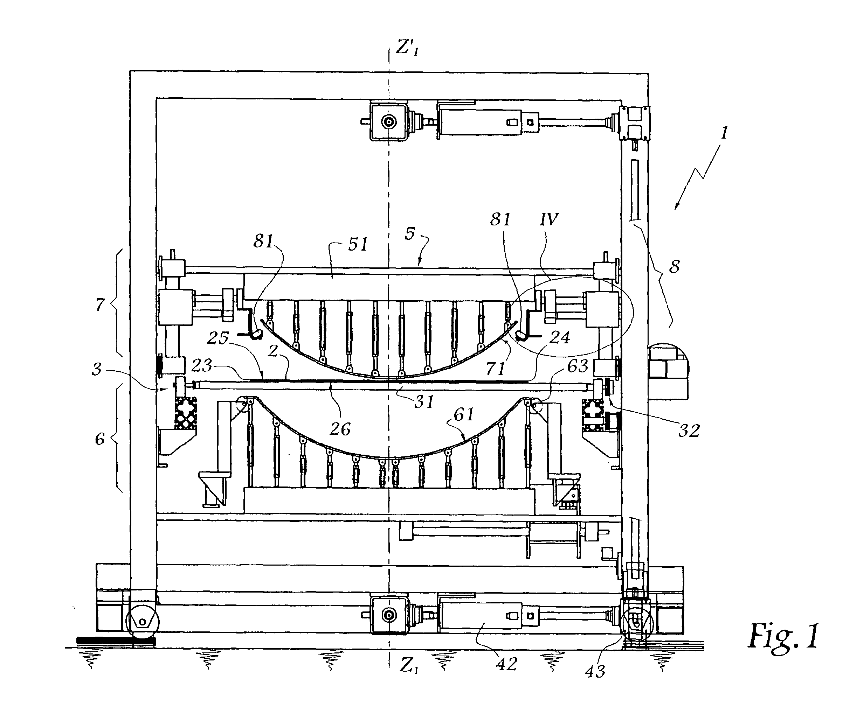

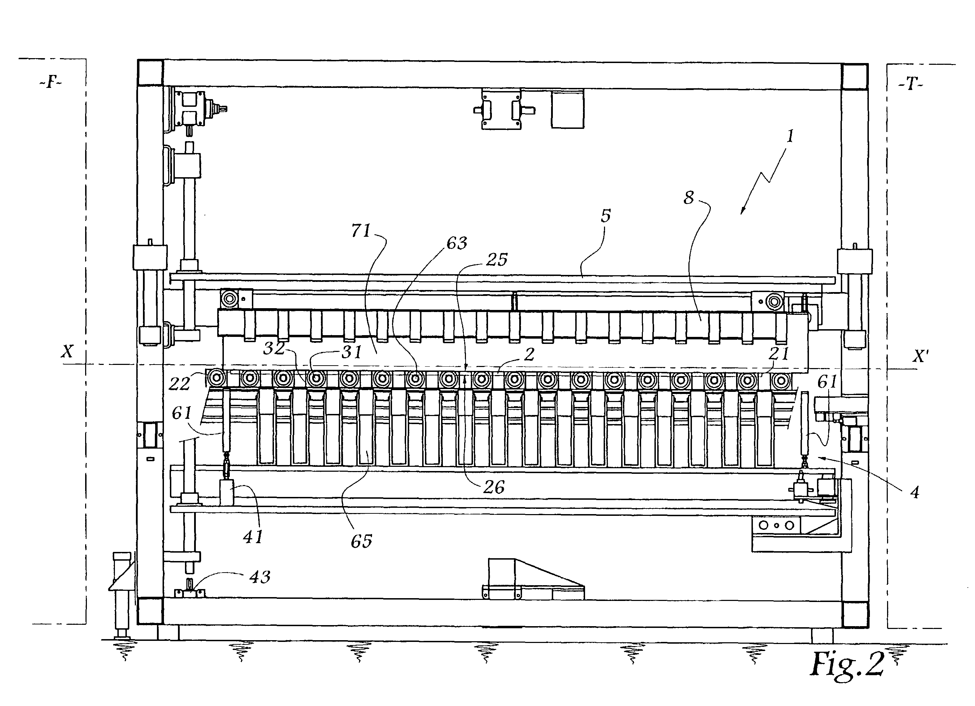

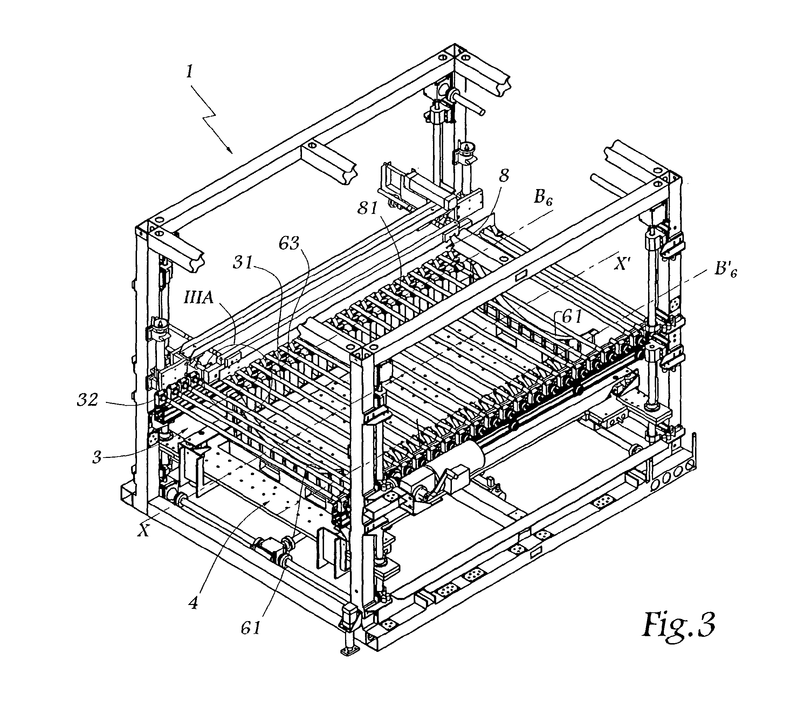

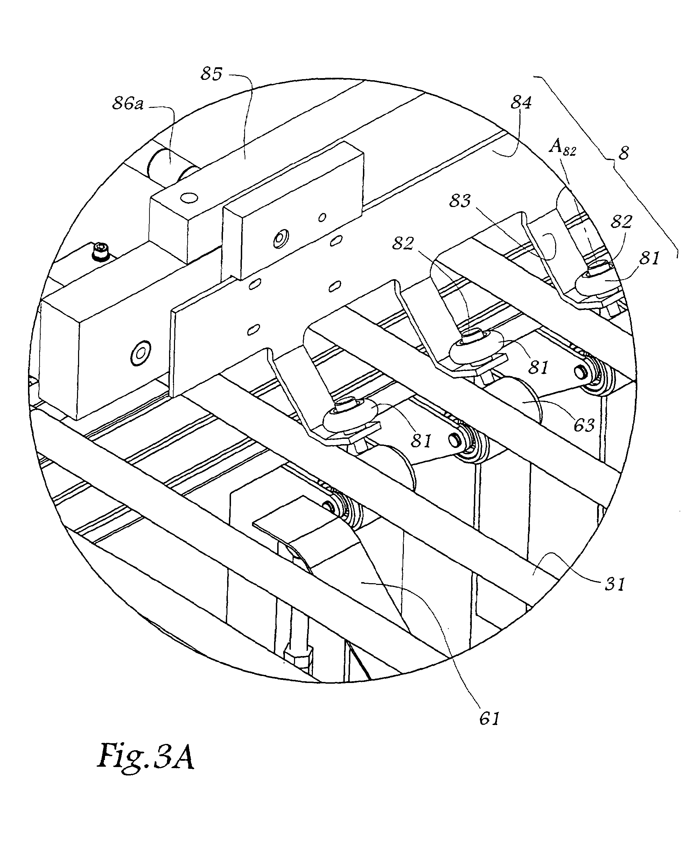

La machine 1, représentée aux figures 1 à 5, est destinée à la mise en forme de feuilles de verre 2 sortant d'un four F dans lequel les feuilles sont chauffées par radiation, conduction, convection et/ou toute autre méthode appropriée.

Outre le four F, la machine 1 comprend une unité ou presse P dans laquelle les feuilles 2 sont pressées et cintrées avec une géométrie prédéterminée, ainsi qu'une unité de trempe T dans laquelle les feuilles de verre pressées et cintrées sont trempées.

On note X-X' la direction de convoyage des feuilles 2 entre les unités F, P et T.

On note 21 le bord avant d'une feuille 2, ce bord étant globalement perpendiculaire à la direction X-X'. On note 22 le bord arrière d'une feuille 2 opposé au bord avant. On note respectivement 23 et 24 les bords latéraux ou longitudinaux d'une feuille 2. On note respectivement 25 et 26 les faces supérieure et inférieure d'une feuille 2.

Un convoyeur 3 est utilisé pour déplacer les feuilles 2 selon la direction X-X' et comprend des rouleaux 31 susceptibles de mouvements de rotation autour de leurs axes centraux respectifs qui sont globalement perpendiculaires à la direction X-X' et globalement horizontaux, ce qui leur permet de supporter les feuilles 2, dont les surfaces 26 sont en appui sur les génératrices supérieures des rouleaux 31. Certains ou tous les rouleaux 31 peuvent être entraînés en rotation par un moteur 32.

La machine 1 comporte un plateau de presse inférieur 4 et un plateau de presse supérieur 5, ces plateaux 4 et 5 étant susceptibles d'un mouvement de rapprochement ou d'écartement selon une direction Z-Z' perpendiculaire à la direction X-X' et, en pratique, globalement verticale.

Le plateau inférieur 4 est équipé d'un organe de conformation femelle ou matrice 6 constitué par deux ceintures 61 et des rouleaux 63 disposés le long des bords longitudinaux B₆ et B'₆ de l'organe 6, les éléments 61 et 63 étant prévus pour venir en appui contre les bords 21 à 24 des feuilles 2, du côté de leur face 26.

Un organe de conformation mâle ou poinçon 7 est monté sur le plateau 5 et comprend une plaque 71 destinée à venir en appui contre la face 25 des feuilles 2 transitant successivement par la presse P.

La presse P comprend également deux dispositifs 8 de supportage et de guidage des bords latéraux 23 et 24 des feuilles 2, au terme de l'opération de pressage-cintrage effectuée dans la presse P.

Chaque dispositif 8 comprend une série de roulettes 81 montées folles sur les axes 82 s'étendant chacun selon une direction A₈₂ perpendiculaire à la direction de convoyage X-X'.

Chaque axe 82 est supporté par une patte 83 reliée à une platine 84 montée coulissante sur un rail 85 et commandée en translation horizontale le long du rail 85 par la tige 86a d'un vérin 86. Le rail 85 est supporté par un chariot 87 susceptible de mouvements verticaux le long d'un montant 9 de la machine 1, le déplacement du chariot 87 étant commandé par un vérin 88.

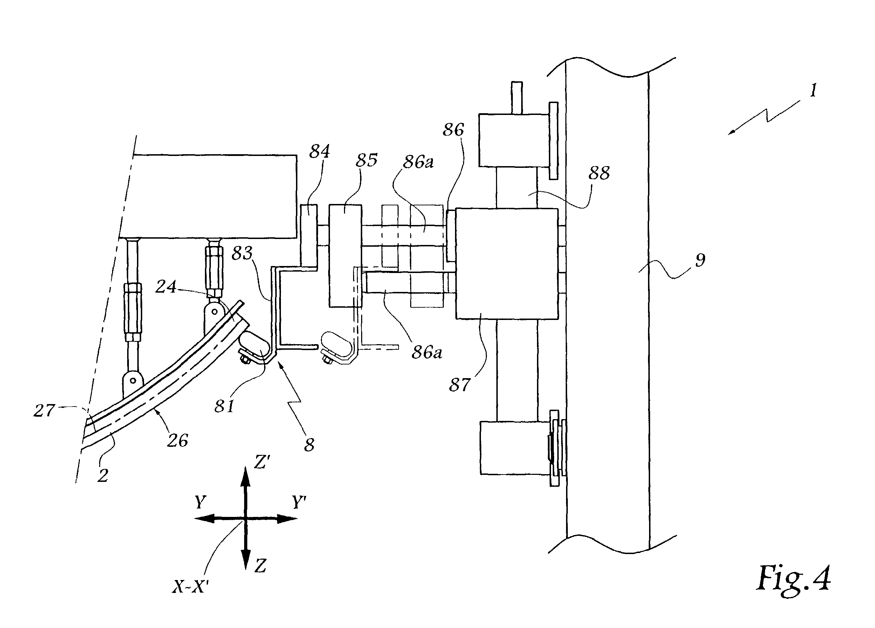

Ainsi, les roulettes 81 du dispositif 8 peuvent être déplacées par les vérins 86 et 88 selon deux directions Y-Y' et Z-Z' perpendiculaires à la direction X-X' et respectivement sensiblement horizontale et sensiblement verticale. On a représenté en traits pleins à la figure 4 une position d'une roulette 81 dans laquelle elle peut supporter le bord longitudinal 24 d'une feuille 2. En traits mixtes est représentée une position de la roulette 81 effacée par rapport à une plaque de verre 2, c'est-à-dire une position dans laquelle la roulette 81 n'est pas susceptible d'interagir avec le bord 24.

Les roulettes 81 ont leur bord radial externe 81a à section elliptique, ce qui leur permet de créer un appui tangentiel sur la face 26 des feuilles 2, au niveau des bords 24, alors que la fibre neutre 27 des feuilles 2 peut avoir différentes orientations, comme représenté respectivement en traits pleins et en traits mixtes à la figure 4, compte tenu des différentes conformations possibles pour les feuilles 2.

Un dispositif 8 est prévu de chaque côté des organes 6 et 7, les roulettes de l'un de ces dispositifs pouvant supporter le bord 23 d'une feuille 2, alors que les roulettes de l'autre dispositif supportent le bord 24 de ces roulettes. La position des roulettes 81 de chaque dispositif 8 est réglable selon les directions Y-Y' et Z-Z' en fonction de la géométrie prévue pour les feuilles 2. Ce réglage de la position des roulettes 81 est indépendant pour les roulettes 81 du dispositif 8 situé sur la gauche de la figure 1 et pour les roulettes 81 du dispositif 8 situé sur la droite de cette figure. Ainsi, les feuilles de verre pressées et cintrées dans la presse P n'ont pas à être symétriques par rapport à un axe médian Z₁-Z'₁ de la machine 1.

On comprend que les roulettes 81 des dispositifs 8 permettent de supporter et de guider les bords latéraux 23 et 24 des feuilles 2 après leur cintrage, lorsque ces feuilles sont évacuées, par les rouleaux 31 du convoyeur 3, en direction de l'unité de trempe T.

Le matériau utilisé pour réaliser les roulettes 81 est choisi pour résister à la température des feuilles de verre au terme de l'opération de cintrage, cette température étant typiquement supérieure à 640°C et, en pratique, l'ordre de 650°C. Pour ce faire, les roulettes 81 peuvent être réalisées en polytétrafluoroéthylène ou dans un matériau composite incluant des fibres de verre.

Les pattes 83 et les platines 84 sont configurées de telle sorte que les roulettes 81 se trouvent chacune au-dessus d'un rouleau 31. Dans ces conditions, elles n'interfèrent pas avec le fonctionnement des organes constitutifs de la matrice 6, à savoir les éléments 61 et 63. Ainsi, les rouleaux 63 et les roulettes 81 peuvent être en appui simultané ou quasi simultané contre les bords longitudinaux 23 et 24 des feuilles de verre 2.

Il est ainsi possible de prévoir que, à la fin de l'opération de pressage-cintrage, et avant que le poinçon et la matrice ne soit écarté l'un de l'autre, les roulettes 81 soient amenées au contact ou au voisinage immédiat des bords 23 et 24.

En variante, on peut prévoir que le poinçon et la matrice sont écartés l'un de l'autre avant que les roulettes 81 ne soient amenées au contact ou au voisinage des bords 23 et 24.

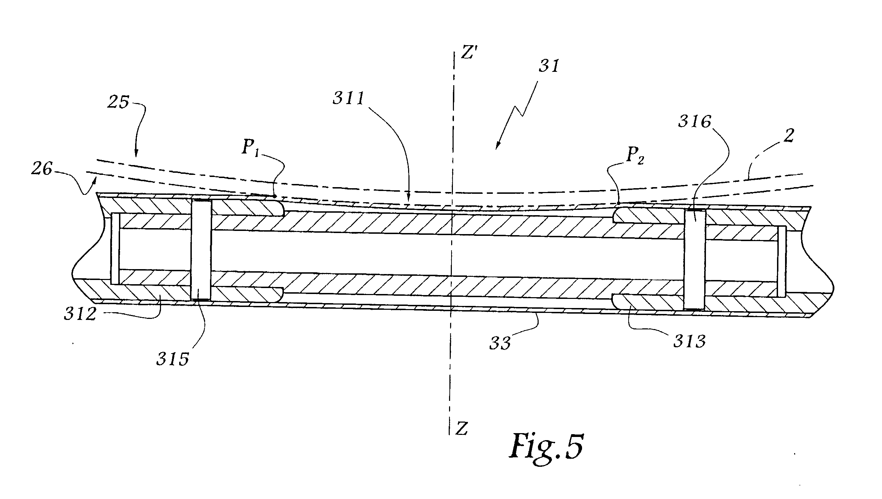

Comme il ressort plus particulièrement de la figure 5, chaque rouleaux 31 est pourvu d'une zone en creux 311 dans sa partie centrale, cette zone en creux lui permettant de recevoir et de guider une feuille de verre cintrée, comme représenté en traits mixtes sur cette figure. Plus précisément, chaque rouleau 31 comprend un tube 312 de diamètre relativement petit inséré dans deux tubes 313 et 314 de diamètre plus important, les tubes 312 et 313, d'une part, 312 et 314, d'autre part, étant immobilisés les uns par rapport aux autres grâce à des goupilles 315 et 316. La zone 311 est ainsi formée par la différence des diamètres externes des tubes 312, 313 et 314. La génératrice du rouleau 31, qui est formée par la réunion des génératrice des tubes 313, 312 et 314, est ainsi concave au niveau de la zone 311. Ainsi, l'appui de la feuille de verre cintrée 2 sur le rouleau 31 peut avoir lieu en deux points P₁ et P₂ ou sur une ligne, ce qui permet un guidage longitudinal de la feuille de verre cintrée.

Chaque rouleau est entouré d'une gaine 33 réalisée en fibres d'aramide, en fibres de silice ou en micro-fils métalliques suffisamment souple pour se déformer au niveau de la zone 31 dans la partie sur laquelle repose la feuille 2.

## Revendications

1. Machine de pressage-cintrage de feuilles de verre, comprenant, en série le long d'une direction de convoyage, un four de préchauffage, une unité de pressage-cintrage et une unité de trempe des feuilles de verre, **caractérisée en ce que**, au niveau de ladite unité de pressage-cintrage, des supports latéraux (8) indépendants du dispositif de convoyage (3) sont prévus pour recevoir en appui les bords longitudinaux (23, 24) d'une feuille de verre (2), au terme d'une opération de pressage-cintrage réalisée dans ladite unité de pressage-cintrage, et guider lesdits bords longitudinaux lors d'un déplacement de ladite feuille de ladite unité de pressage-cintrage (P) vers ladite unité de trempe (T).

2. Machine selon la revendication 1, **caractérisée en ce que** lesdits supports (8) sont réglables selon deux directions (Y-Y', Z-Z') perpendiculaires à la direction d'avance (X-X') des feuilles de verre (2) dans ladite machine (1).

3. Machine selon la revendication 2, **caractérisée en ce que** le support (8) prévu pour recevoir un premier bord longitudinal (23) des feuilles de verre (2) est réglable selon lesdites deux directions (Y-Y', Z-Z') indépendamment du support (8) prévu pour recevoir le second bord longitudinal (24) des feuilles.

4. Machine selon l'une des revendications précédentes, **caractérisée en ce qu'**elle comprend des moyens (85-88) de déplacement desdits supports (8), vers une position où ils n'interagissent pas avec les feuilles de verre (2), après chaque déplacement d'une feuille de verre cintrée de ladite unité de pressage-cintrage (P) vers ladite unité de trempe (T).

5. Machine selon l'une des revendications précédentes, **caractérisée en ce que** lesdits supports comprennent chacun au moins une roulette (81) montée libre en rotation autour d'un axe (82) globalement perpendiculaire à la direction d'avance (X-X') des feuilles de verre.

6. Machine selon la revendication 5, **caractérisée en ce que** lesdits roulettes sont réalisées dans un matériau résistant à une température supérieure à 640°C.

7. Machine selon la revendication 6, **caractérisée en ce que** lesdites roulettes sont réalisées en polytétrafluoroéthylène ou dans un matériau composite comprenant une résine chargée en fibres de verre.

8. Machine selon l'une des revendications 5 à 7, **caractérisée en ce que** lesdites roulettes sont à génératrice elliptique (81a).

9. Machine selon l'une quelconque des revendications précédentes, **caractérisée en ce que** le dispositif de convoyage (3) des feuilles de verre (2) entre ladite unité de pressage-cintrage (P) et ladite unité de trempe (T) comprend des rouleaux (31) dont la section transversale est réduite dans une zone centrale (311) desdits rouleaux, ladite zone étant formée par la différence entre le diamètre externe d'un premier tube (312) et les diamètres externes de deux autres tubes (313, 314) dans lesquels est inséré et immobilisé le premier tube.

10. Machine selon la revendication 9, **caractérisée en ce que** lesdits rouleaux (31) sont entourés d'une gaine déformable (33).

11. Machine selon l'une des revendications précédentes, **caractérisée en ce que** l'un (6) des organes de conformation de ladite unité (P) de pressage-cintrage est constitué par deux ceintures (61) et par des rouleaux (63) disposés le long des bords longitudinaux (B₆, B'₆) dudit organe.

12. Procédé de pressage-cintrage d'une feuille de verre comprenant une première étape dans laquelle ladite feuille de verre est pressée par un premier organe de conformation contre un second organe de conformation dans une unité de pressage-cintrage et une deuxième étape de déplacement de ladite feuille de verre par un dispositif de convoyage vers une unité de trempe, **caractérisé en ce qu'**il comprend une étape intermédiaire entre lesdites première et deuxième étape dans laquelle des supports latéraux (8) indépendants du dispositif de convoyage (3) sont amenés au voisinage ou au contact des bords longitudinaux (23, 24) de ladite feuille de verre (2).

13. Procédé selon la revendication 12, **caractérisé en ce que** ladite étape intermédiaire est mise en oeuvre alors que ladite feuille de verre (2) est encore soumise à l'action dudit organe de conformation (6).

14. Procédé selon la revendication 12, **caractérisé en ce que** ladite étape intermédiaire est mise en oeuvre après que ladite feuille de verre (2) a été soumise à l'action dudit organe de conformation.

## Patentansprüche

1. Maschine zum Press-Biegen von Glasflächenkörpern, die der Reihe nach entlang einer Förderrichtung einen Ofen zum Vorerwärmen, eine Press-Biegeeinheit und eine Abschreckeinheit für die Glasflächenkörper umfasst,
**dadurch gekennzeichnet, dass**
auf Höhe der Press-Biegeeinheit seitliche Stützen bzw. Träger (8), die von der Fördereinrichtung (3) unabhängig sind, vorgesehen sind, um die Längsränder (23, 24) eines Glasflächenkörpers (2) für einen Press-Biegevorgang, der in der Press-Biegeeinheit stattfindet, unterstützend aufzunehmen und die Längsränder bei einer Ortsveränderung des Flächenkörpers von der Press-Biegeeinheit (P) zur Abschreckeinheit (T) zu führen.

2. Maschine nach Anspruch 1,
**dadurch gekennzeichnet, dass**
die Stützen (8) in zwei Richtungen (Y-Y', Z-Z'), die senkrecht zur Vorwärtsrichtung (X-X') der Glasflächenkörper (2) in der Maschine (1) verlaufen, verstellbar sind.

3. Maschine nach Anspruch 2,
**dadurch gekennzeichnet, dass**
die Stütze (8), die vorgesehen ist, um einen ersten Längsrand (23) der Glasflächenkörper (2) aufzunehmen, in den beiden Richtungen (Y-Y', Z-Z') unabhängig von der Stütze (8) verstellbar ist, die vorgesehen ist, um den zweiten Längsrand (24) der Flächenkörper aufzunehmen.

4. Maschine nach einem der vorhergehenden Ansprüche,
**dadurch gekennzeichnet, dass**
sie Verschiebe-Einrichtungen (85 - 88) umfasst, um die Stützen (8) nach jeder Verschiebung eines gebogenen Glasflächenkörpers von der Press-Biegeeinheit (P) zur Abschreckeinheit (T) zu einer Stelle zu verschieben, an der sie nicht mehr mit den Glasflächenkörpern (2) zusammenwirken.

5. Maschine nach einem der vorhergehenden Ansprüche,
**dadurch gekennzeichnet, dass**
die Stützen jeweils mindestens eine Rolle bzw. Kugelrolle bzw. Walze (81) umfassen, die um eine Achse (82) frei drehbeweglich angebracht ist, die im Wesentlichen senkrecht zur Vorwärtsrichtung (X-X') der Glasflächenkörper ist.

6. Maschine nach Anspruch 5,
**dadurch gekennzeichnet, dass**
die Rollen aus einem Material bestehen, das gegenüber einer Temperatur von über 640°C widerstandsfähig ist.

7. Maschine nach Anspruch 6,
**dadurch gekennzeichnet, dass**
die Rollen aus Polytetrafluorethylen oder einem Verbundmaterial bestehen, das ein glasfaserdurchsetztes Harz umfasst.

8. Maschine nach einem der Ansprüche 5 bis 7,
**dadurch gekennzeichnet, dass**
die Rollen eine elliptische Mantellinie (81a) haben.

9. Maschine nach einem der vorhergehenden Ansprüche,
**dadurch gekennzeichnet, dass**
die Fördereinrichtung (3) für die Glasflächenkörper (2) zwischen der Press-Biegeeinheit (P) und der Abschreckeinheit (T) Rollen (31) umfasst, deren Querschnitt in einem mittleren Bereich (311) der Rollen reduziert ist, wobei der Bereich durch den Unterschied zwischen dem Außendurchmesser eines ersten Rohrs (312) und den Außendurchmessern von zwei anderen Rohren (313, 314) gebildet ist, worin das erste Rohr eingeschoben und unbeweglich festgesetzt ist.

10. Maschine nach Anspruch 9,
**dadurch gekennzeichnet, dass**
die Rollen (31) von einem verformbaren Mantel (33) umgeben sind.

11. Maschine nach einem der vorhergehenden Ansprüche,
**dadurch gekennzeichnet, dass**
eines (6) der Formgebungselemente der Press-Biegeeinheit (P) aus zwei Gurten (61) und Rollen (63) gebildet ist, die entlang der Längsränder (B₆, B₆') des Elements angeordnet sind.

12. Verfahren zum Press-Biegen eines Glasflächenkörpers, das einen ersten Schritt, bei dem der Glasflächenkörper in der Press-Biegeeinheit von einem ersten Formgebungselement gegen ein zweites Formgebungselement gepresst wird, und einen zweiten Schritt umfasst, bei dem der Glasflächenkörper von einer Fördereinrichtung zu einer Abschreckeinheit verschoben wird,
**dadurch gekennzeichnet, dass**
es einen Zwischenschritt zwischen dem ersten und dem zweiten Schritt umfasst, bei dem die von der Fördereinrichtung (3) unabhängigen seitlichen Stützen (8) in die Nähe der oder in Berührung mit den Längsrändern (23, 24) des Glasflächenkörpers (2) gebracht werden.

13. Verfahren nach Anspruch 12,
**dadurch gekennzeichnet, dass**
der Zwischenschritt durchgeführt wird, wenn der Glasflächenkörper (2) noch unter der Einwirkung des Formgebungselements (6) steht.

14. Verfahren nach Anspruch 12,
**dadurch gekennzeichnet, dass**
der Zwischenschritt durchgeführt wird, nachdem der Glasflächenkörper (2) unter der Einwirkung des Formgebungselements (6) stand.

## Claims

1. Machine for pressing-bending sheets of glass comprising, in series along a conveying direction, a preheating furnace, a pressing-bending unit and a unit for tempering the sheets of glass, **characterised in that**, at said pressing-bending unit, lateral supports (8), which are independent of the conveying device (3), are provided in order to receive, by supporting, the longitudinal edges (23, 24) of a sheet of glass (2), at the end of a pressing-bending operation, which is implemented in said pressing-bending unit, and to guide said longitudinal edges during a displacement of said sheet from said pressing-bending unit (P) towards said tempering unit (T).

2. Machine according to claim 1, **characterised in that** said supports (8) can be controlled according to two directions (Y - Y', Z - Z') which are perpendicular to the advancing direction (X - X') of the sheets of glass (2) into said machine (1).

3. Machine according to claim 2, **characterised in that** the support (8), which is provided in order to receive a first longitudinal edge (23) of the sheets of glass (2), can be controlled according to said two directions (Y - Y', Z - Z') independently of the support (8) which is provided in order to receive the second longitudinal edge (24) of the sheets.

4. Machine according to one of the preceding claims, **characterised in that** it comprises means (85 - 88) for displacing said supports (8), towards a position where they do not interact with the sheets of glass (2), after each displacement of a sheet of bent glass from said pressing-bending unit (P) towards said tempering unit (T).

5. Machine according to one of the preceding claims, **characterised in that** said supports each comprise at least one castor (81) which is mounted free in rotation about an axis (82) which is overall perpendicular to the advancing direction (X - X') of the sheets of glass.

6. Machine according to claim 5, **characterised in that** said castors are produced in a material which is resistant to a temperature higher than 640°C.

7. Machine according to claim 6, **characterised in that** said castors are produced in polytetrafluoroethylene or in a composite material comprising a resin which is filled with glass fibres.

8. Machine according to one of the claims 5 to 7, **characterised in that** said castors have an elliptical generator (81a).

9. Machine according to any of the preceding claims, **characterised in that** the device (3) for conveying the sheets of glass (2) between said pressing-bending unit (P) and said tempering unit (T) comprises castors (31), the transverse section of which is reduced in a central zone (311) of said castors, said zone being formed by the difference between the external diameter of a first tube (312) and the external diameters of two other tubes (313, 314) in which the first tube is inserted and immobilised.

10. Machine according to claim 9, **characterised in that** said castors (31) are surrounded by a deformable sheath (33).

11. Machine according to one of the preceding claims, **characterised in that** the one (6) of the shaping elements of said pressing-bending unit (P) comprises two belts (61) and castors (63) which are disposed along longitudinal edges (B₆, B'₆) of said element.

12. Method of pressing-bending a sheet of glass comprising a first step in which said sheet of glass is pressed by a first shaping element against a second shaping element in a pressing-bending unit and a second step of displacing said sheet of glass by a conveying device towards a tempering unit, **characterised in that** it comprises an intermediate step between said first and second steps in which lateral supports (8), which are independent of the conveying device (3), are led into the proximity of or into contact with longitudinal edges (23, 24) of said sheet of glass (2).

13. Method according to claim 12, **characterised in that** said intermediate step is implemented when said sheet of glass (2) is still being subjected to the action of said shaping element (6).

14. Method according to claim 12, **characterised in that** said intermediate step is implemented after said sheet of glass (2) has been subjected to the action of said shaping element.
